Europäisches Patentamt

European Patent Office

Office européen des brevets

(11) Veröffentlichungsnummer: **0 123 779**
**B1**

(12) # EUROPÄISCHE PATENTSCHRIFT

(45) Veröffentlichungstag der Patentschrift:
**29.10.86**

(51) Int. Cl.⁴: **G 01 F 23/22**

(21) Anmeldenummer: **84100271.0**

(22) Anmeldetag: **12.01.84**

(54) **Einrichtung zur elektrischen Füllstandmessung einer Flüssigkeit in einem Behälter, insbesondere einem Fahrzeugtank.**

(30) Priorität: **25.04.83 DE 3314901**

(43) Veröffentlichungstag der Anmeldung:
**07.11.84 Patentblatt 84/45**

(45) Bekanntmachung des Hinweises auf die Patenterteilung:
**29.10.86 Patentblatt 86/44**

(84) Benannte Vertragsstaaten:
**DE FR GB IT SE**

(56) Entgegenhaltungen:
**DE - A - 2 908 449**
**DE - A - 3 108 969**
**FR - A - 2 362 375**

(73) Patentinhaber: **VDO Adolf Schindling AG,**
**Gräfstrasse 103, D-6000 Frankfurt/Main (DE)**

(72) Erfinder: **Rau, Karl, Thomas-Mann-Strasse 30,**
**D-6052 Mühlheim (DE)**
Erfinder: **Kalk, Heinz, Offenbacher Strasse 139,**
**D-6078 Neu-Isenburg (DE)**
Erfinder: **Metzger, Gerhard, Auf der Plott 39,**
**D-6246 Glashütten 1 (DE)**

(74) Vertreter: **Könekamp, Herbert, Dipl.-Ing., Sodener**
**Strasse 9, D-6231 Schwalbach (DE)**

### Beschreibung

Die Erfindung betrifft eine Einrichtung zur elektrischen Füllstandsmessung nach dem Oberbegriff des Anspruchs 1. Bei einer derartigen bekannten Einrichtung (DE-A-29 08 449) ist im einzelnen zur Aufnahme der als Bandleitung ausgebildeten Leiterfolie ein Trägerelement mit einem Hauptkörper und einem aufklappbaren und durch Rastmittel arretierbaren Deckel vorgesehen. Zwischen dem Deckel und dem Hauptkörper ist ein Hohlraum zur Aufnahme eines Abschnitts der Bandleitung und mindestens eine Öffnung zum Zutritt des zu messenden Mediums gebildet. Parallel zu diesem Hohlraum kann in dem Hauptkörper ferner ein Ansaugkanal angeordnet sein, in dem ein umgebogener unterer Abschnitt der Bandleitung mit Kompensationselektroden eingeführt ist. Der obere Abschnitt der Bandleitung weist dabei die Messelektroden auf. Die Bandleitung kann in das geöffnete Trägerelement eingelegt werden und durch Zuklappen und Einrasten des Deckels in dem Trägerelement festgelegt bzw. eingeklemmt werden. Das Trägerelement und der Deckel können einstückig aus Kunststoff hergestellt sein, wobei der Deckel mit dem Hauptkörper durch wenigstens ein Filmscharnier verbunden ist. Zur leichten Montage der Einrichtung ist das Trägerelement oben schwenkbar ausgebildet und mit einer Feder versehen, die das Trägerelement gegen den Boden des das Medium aufnehmenden Behälters drückt. Die Schwenkbarkeit wird dabei insbesondere durch ein oben an dem Trägerelement befestigtes Schlauchstück erzielt. Durch diese schwenkbare Ausbildung lässt sich das Trägerelement zwar in Behältern unterschiedlicher Höhe montieren, da sich das Trägerelement durch variable Neigung an die verfügbare lichte Höhe anpasst. — Nachteilig ist dabei aber, dass die Befestigungsstelle des Trägerelements stets an dem höchsten Punkt des Behälters liegen muss, da sonst — bei einer tiefer liegenden Befestigungsstelle — der Füllstand in dem darüber liegenden Behälterteil nicht gemessen werden kann. Dadurch sind die Einsatzmöglichkeiten dieses Messfühlers eingeschränkt.

In einer anderen Ausführungsform der Einrichtung ist es auch bekannt, die Leitung mit den Messelektroden und Kompensationselektroden als rundes Kabel aus Kunststoff auszubilden, welches ohne Trägerelement in dem Behälter angebracht wird. Das Kabel weist konzentrische ringförmige Anordnungen von zueinander beabstandeten Elektroden als Leitungszüge auf, zwischen denen hohle Kammern ausgespart sind. — Diese runden Kabel können sich flexibel unterschiedlichen Behälterformen anpassen, jedoch reichen auch sie nicht von einer tieferen Befestigungsstelle ohne weiteres an eine höher gelegene Oberseite des Behälters. Ferner kann durch unkontrollierte Krümmungen des Kabels die Messgenauigkeit beeinträchtigt werden. Dieser Nachteil tritt auch dadurch auf, dass das untere Ende des Kabels ohne weitere Massnahmen frei beweglich ist und insbesondere in einem Fahrzeug schwer kontrollierbare und definierbare Lagen in dem Behälter annehmen kann.

Aus der FR-A-2362375 ist eine Einrichtung zur elektrischen Füllstandsmessung einer Flüssigkeit in einem Fahrzeugtank bekannt, bei der ein in drei annähernd starre Abschnitte gegliederter Messarm verwendet wird. Je zwei Abschnitte dieses Messarms sind kniehebelartig gelenkig miteinander verbunden.

Zu der vorliegenden Erfindung gehört daher die Aufgabe, eine Einrichtung zur elektrischen Füllstandsmessung mit einem im wesentlichen starren Träger als Schutzrohr einer Leiterfolie nach der eingangs genannten Gattung so weiterzubilden, dass die Einrichtung ohne weiteres unterschiedlichen Behälterformen angepasst werden kann und insbesondere auch dort eingesetzt werden kann, wo die Befestigungsstelle des Trägers an dem Behälter tiefer liegt als ein Teil der Oberseite des Behälters. Trotzdem soll mit dieser Einrichtung eine genaue Messung möglich sein und insbesondere der Füllstand zwischen der Befestigungsstelle des Trägers und dem höchsten Abschnitt der Oberseite des Behälters in die Messung mit eingehen.

Diese Aufgabe wird durch die in dem kennzeichnenden Teil des Anspruchs 1 angegebenen Merkmale gelöst.

Bei dem erfindungsgemässen Träger dient ein erster starrer Abschnitt zur Befestigung des gesamten Trägers an einer praktisch beliebigen Stelle auf der Oberseite des Behälters, die somit auch tiefer als andere Stellen der Oberseite liegen kann. Der zur Befestigung dienende Abschnitt wird vorzugsweise mit elektrischen Anschlussmitteln, insbesondere Steckern zum Anschluss des Gebers an einen ausserhalb des Behälters liegenden Messteil versehen. Der äusserste Abschnitt des Trägers hat die Funktion des die Leiterfolie umhüllenden Schutzrohres, dessen Inneres mit dem Füllstand in dem Behälter kommuniziert. Die Leiterfolie nimmt in dem Schutzrohr eine vorgegebene, insbesondere plane oder spiralige Konfiguration ein. Da der äusserste Abschnitt des Trägers durch die Federkraft selbsttätig so geschwenkt wird, dass er sich einerseits an dem Boden und andererseits an der Oberseite des Behälterinneren abstützt, wird eine bestimmte Konfiguration zu dem Behälter eingenommen und auch bei Erschütterungen des Behälters beibehalten. Daraus ergibt sich insgesamt eine hohe Messgenauigkeit. — Die Leiterfolie kann einen temperaturabhängigen fremdbeheizten Widerstand bilden und in Abschnitte mit einem Messwiderstand und einem Kompensationswiderstand unterteilt sein. Der Füllstand wird dann durch Vergleich des Messwiderstands mit dem Kompensationswiderstand in der Auswerteschaltung ermittelt. Die Leiterfolie kann statt dessen auch Messelektroden und Kompensationselektroden zur kapazitiven Füllstandsmessung bilden. Im letztgenannten Fall wird der Füllstand durch Vergleich der Messkapazität und der Kompensationskapazität, welche die Dielektrizitätskonstante des zu messenden Mediums feststellt, in der Auswerteschaltung ermittelt. Dabei taucht der Abschnitt der Leiterfolie, der die Kompensationselektronden trägt, vollständig in das zu messende Medium ein, indem der Abschnitt mit den Kompensationselektroden an der tiefsten Stelle des Behälters angeordnet ist oder in einer Entnahmeleitung, die ständig mit dem Medium gefüllt ist. — Besonders genau werden mit dieser Einrichtung auch Restmengen der Flüssigkeit erfasst, selbst wenn der Boden des Behälters beispielsweise in Abhängigkeit von dem Füllstand unterschiedlich tief durchhängt.

Bevorzugt ist der an der Oberseite des Behälterinneren befestigbare Abschnitt des Trägers wesentlich kürzer als dessen beiden anderen Abschnitte. Dadurch kann auch die Länge des mittleren Abschnitts des Trägers trotz guter Höhenanpassung an die lichte Höhe des Behälters noch relativ kurz gehalten werden. Der mittlere Abschnitt kann so leicht und materialsparend und trotzdem mechanisch widerstandsfähig ausgeführt werden. Hierzu weist der mittlere Abschnitt vorzugsweise die Form eines U-Profils oder eines Kastens auf.

Bevorzugt ist der an der Oberseite des Behälterinneren befestigbare Abschnitt entsprechend Anspruch 3 ausgebildet. Damit dient dieser Abschnitt nicht nur als Bestandteil des gesamten gelenkigen Trägers, sondern auch zur Unterbringung der Auswerteschaltung. Dieser Abschnitt eignet sich hierzu besonders gut, da er infolge der funktionellen Trennung von dem Messteil des Trägers ohne weiteres geschlossen ausgebildet werden kann und da nur dafür zu sorgen ist, dass an der Durchtrittsstelle der Leiterfolie nicht das zu messende Medium in das Innere dieses Abschnitts eindringt. In einer ersten Variante ist der äusserste Abschnitt zweckmässig aus zwei senkrecht zur Längsrichtung zusammenschiebbaren getrennten Hälften gebildet, die miteinander durch Rastverbindungen zu einer Einheit zusammengehalten werden. Vor dem Zusammenschieben der beiden Hälften lässt sich zwischen hierfür vorgesehene Seiten der Hälften die Leiterfolie einfügen, die somit in dem Hohlraum des gebildeten Schutzrohres ausgespannt und sicher festgehalten wird. Durch diese Ausbildung wird also bei verhältnismässig einfacher Montage eine hohe Messgenauigkeit erzielt.

Im einzelnen kann die voranstehend umrissene Ausführungsform vorteilhaft nach Anspruch 5 ausgeführt sein. Dabei bilden die Schenkel der U-förmigen Hälften Klemmteile für die Randflächen der Leiterfolie. An diesen Randflächen tritt eine grossflächige Berührung mit dem Träger ein, so dass hier die Umgebungstemperatur gut gemessen werden kann, wenn die Randflächen mit dem Kompensationswiderstand versehen sind. Die zwei Schenkel miteinander zur U-Form ergänzenden Stege sind — entsprechend der üblichen U-Form — gekrümmt und eignen sich deswegen besonders dazu, bei der Montage der beiden Hälften elastisch verformt zu werden.

Beide Hälften des äussersten Abschnitts können entweder selbst mit Rastansätzen, vorzugsweise an diagonal gegenüberliegenden Kanten versehen sein, um eine sichere Rastverbindung zu erzielen, oder aber durch klammerförmige aufgeschobene Teile miteinander verbunden sein. Insbesondere kann vorzugsweise ein unteres Fussteil in beide Häften einrastend diese zusammenhalten.

Bei dieser aus zwei annähernd U-förmigen Hälften zusammengesetzten Kastenform des äussersten Abschnitts ist die Leiterfolie bevorzugt annähernd Z-förmig mit einer sich diagonal über den Innenraum des äussersten Abschnitts erstreckenden Messleiterfläche eingespannt. Die von der Flüssigkeit entsprechend dem Füllstand umgebene Messleiterfläche ist so verhältnismässig gross.

In einer anderen vorteilhaften Ausführungsform ist der äusserste Abschnitt als längs einer ersten Mantellinie geschnittenes Rohr aus Kunststoff geformt, dessen beide Hälften längs einer zweiten Mantellinie durch ein Filmscharnier miteinander verbunden sind. Die Leiterfolie oder ein Abschnitt der Leiterfolie wird einfach zwischen beiden Hälften in einer Mittelebene längs des Rohres eingespannt. Der eingespannte Abschnitt der Leiterfolie trägt dabei die Messwiderstände bzw. Messelektroden. Ein anderer Abschnitt der Leiterfolie mit dem Kompensationswiderstand bzw. dem Kompensationskondensator kann dabei an einer Innenwand einer Rohrhälfte anliegen. Vorteilhaft ist hier der geringe Materialaufwand für die unverlierbar miteinander verbundenen Hälften des äussersten Abschnitts.

In einer dritten Ausführungsform der Einrichtung weist der äusserste Abschnitt ein längs zweier gegenüberliegender Mantellinien geschnittenes inneres Rohr auf, welches durch mindestens ein es umgreifendes äusseres Rohr zusammengehalten wird. Dabei wird die Leiterfolie annähernd S-förmig zwischen je einer Hälfte des inneren Rohres und dem äusseren Rohr eingeklemmt und erstreckt sich mit seiner Messleiterfläche in der Mittelebene des inneren Rohrs. — Hier erfolgt also die Montage durch Ineinanderschieben des äusseren und des inneren Rohres in axialer Richtung unter gleichzeitigem Einspannen der Leiterfolie. Die Verbindung dieser Elemente kann dabei zuverlässig ohne zusätzliche Befestigungsmassnahmen, wie Verschweissung mit Ultraschall, hergestellt werden.

In einer vierten Ausführungsform ist vorgesehen, dass der äussere Abschnitt als Schutzrohr mit dergestalt innen angeformten Halteelementen für die Leiterfolie ausgebildet ist, dass die Leiterfolie durch die an ihren Längskanten angreifenden Halteelemente wendelförmig in dem Schutzrohr gehalten wird. — Die wendelförmige definierte Ausrichtung der Leiterfolie führt zu einer grossen benetzbaren Fläche und einem besonders grossen Auflösungsvermögen des Messbereichs, ohne grösseren Platzbedarf.

Die Oberfläche der Leiterfolie kann sich sowohl radial als auch axial im Schutzrohr erstrecken. Die im wesentlichen radiale Erstreckung der Ebene der Leiterfolie ermöglicht dabei vorteilhafterweise eine Wendelung der Leiterfolie mit relativ geringer Steigung, was zu einer besonders hohen Auflösung des Messbereichs führt.

Ein Entnahmerohr, z.B. das Ansaugrohr für den Kraftstoff, kann durch die Wendel der Leiterfolie hindurchragen und ist somit ohne wesentlichen zusätzlichen Platzbedarf in die Einrichtung integrierbar.

Zur einfachen und lagegenauen Befestigung der Leiterfolie können die Halteelemente durch eine radial an der Schutzrohrinnenwand und/oder dem Entnahmerohr angrenzende Haltewendel gebildet sein, die vorzugsweise mit dem Schutzrohr oder dem Entnahmerohr einteilig ausgebildet ist. Eine derartige Ausbildung ist auf einfache Weise durch Spritzgiessen oder Extrusion aus Kunststoff herstellbar.

Zur lagerichtigen Befestigung kann die Haltewendel eine nutartige Ausnehmung besitzen, in die die Leiterfolie mit ihrem Bereich ihrer Längskante hineinragt. Aufgrund beidseitiger Befestigung ist dabei die Leiterfolie besonders sicher gehalten, wenn die Haltewendel zwei axial in entgegengesetzte Richtung gerichtete nutartige Ausnehmungen besitzt und der Abstand von Nutboden zu Nutboden der mit ihren Öffnungen einander gegenüberliegenden Ausnehmungen etwa der Breite der Leiterfolie entspricht.

In einer anderen Ausbildungsmöglichkeit zur lagerichtigen Befestigung der Leiterfolie kann die Haltewendel eine radial nach aussen gerichtete Anlagefläche besitzen, an der die Leiterfolie mit ihrem Randbereich in Anlage ist, wobei eine besonders sichere Halterung erreicht wird, wenn die Haltewendel zwei Anlageflächen besitzt und je an einer Anlagefläche ein Randbereich der Leiterfolie in Anlage ist.

Besitzt die Haltewendel einen radial an der Innenwand des Schutzrohres und/oder dem Entnahmerohr anliegenden Abstandshalter, so wird sichergestellt, dass die Leiterfolie immer einen bestimmten Mindestabstand zu Schutzrohr und/oder Entnahmerohr hat und somit gut und ausreichend von Flüssigkeit umgeben ist.

Ein guter Flüssigkeitsaustausch innerhalb des Schutzrohres sowie vom Inneren des Schutzrohres nach aussen ist dadurch möglich, dass das Schutzrohr radiale Durchflussöffnungen und/oder die Haltewendel und ein das Schutzrohr unten abschliessendes Fussteil axiale Durchflussöffnungen besitzt. Gleichzeitig werden dabei aber kurzfristige Schwankungen des Niveaus, die z.B. auf Bewegungen des Behälters beruhen, durch die Durchflussöffnungen gedämpft.

Die Erfindung wird im folgenden anhand einer Zeichnungen mit elf Figuren erläutert, in denen verschiedene bevorzugte Ausführungsformen dargestellt sind. Es zeigen:

Fig. 1 eine Gesamtseitenansicht auf die Einrichtung in einer ersten Ausführungsform (teilweise geschnitten) und in einem Kraftstoffbehälter eingesetzt;

Fig. 2 einen Querschnitt entlang der Linie A-B in Fig. 1;

Fig. 3 eine Draufsicht auf die Einrichtung in Fig. 1 mit entferntem Behälterdeckel;

Fig. 4 einen Querschnitt durch die Schnittlinie C-D in Fig. 1;

Fig. 5 einen Querschnitt durch die Schnittebene entlang der Linie E-F in Fig. 1;

Fig. 6 eine zweite Ausführungsform der Einrichtung in einem Querschnitt durch den äussersten Abschnitt;

Fig. 7 einen Längsschnitt durch den untersten Teil des äussersten Abschnitts nach Fig. 6;

Fig. 8 einen Querschnitt durch eine dritte Ausführungsform;

Fig. 9 einen Längsschnitt durch die unterste Stelle des äussersten Abschnitts in Fig. 8;

Fig. 10 einen Längsschnitt durch einen Teil des äussersten Abschnitts in einer vierten Ausführungsform, und

Fig. 11 einen Querschnitt durch die Ausführungsform nach Fig. 10.

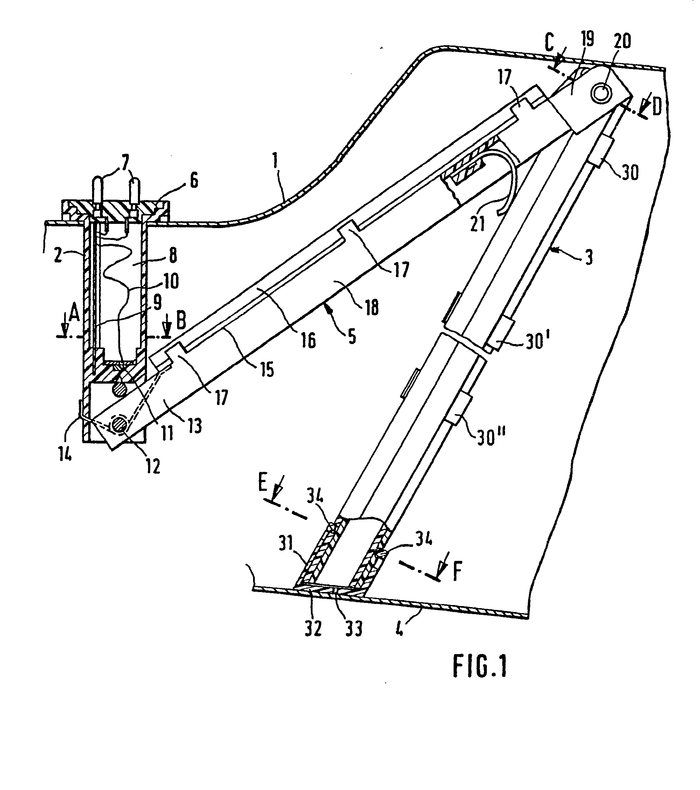

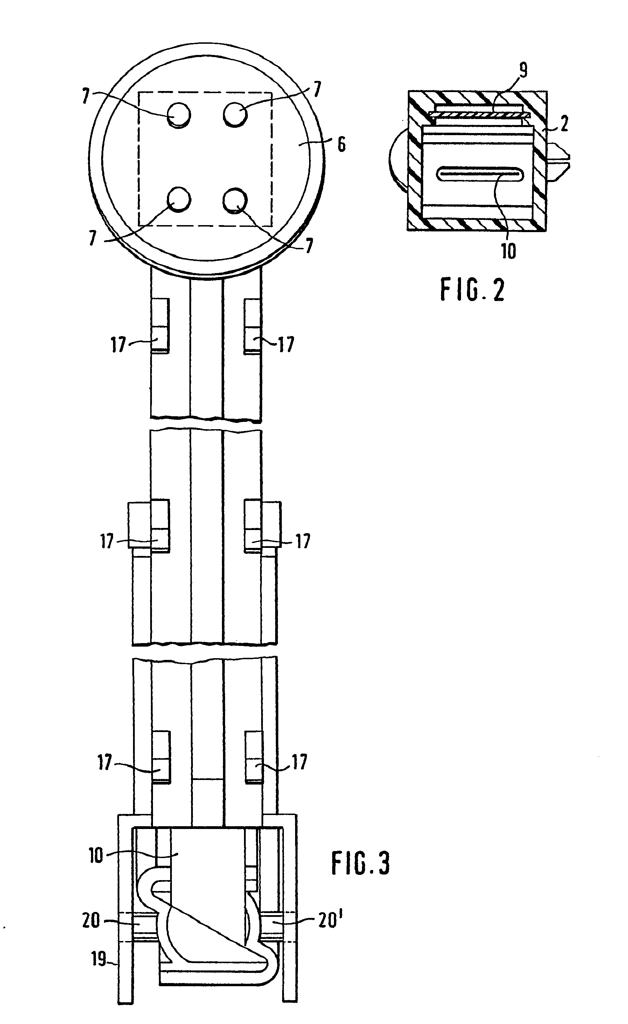

Die Darstellungen in den Figuren 2 bis 11 sind gegenüber denjenigen in Figur 1 vergrössert.

In Figur 1 ist die als Füllstandssonde zu bezeichnende Einrichtung in ihrer Gesamtheit dargestellt.

Sie umfasst einen an einer Oberseite 1 eines Behälters anbringbaren ersten Abschnitt 2, der relativ kurz ist und nach unten in den Behälter hineinreicht, einen sogenannten äussersten Abschnitt 3, der sich sowohl gegen den Boden 4 des Behälters als auch gegen dessen Oberseite 1 abstützt, sowie einen die Abschnitte 2 und 3 verbindenden mittleren Abschnitt 5.

Der erste Abschnitt ist oben durch einen Flansch 6 mit Steckern 7 abgeschlossen, an die äussere Komponenten einer Anzeigeeinrichtung, insbesondere ein Anzeigegerät, sowie eine Betriebsstromquelle bzw. Batterie anschliessbar sind. Die Stecker führen zu einer in einen Hohlraum 8 des ersten Abschnitts eingeschobene Leiterplatte 9, auf der eine Auswerteschaltungsanordnung angeordnet ist. Mit der Leiterplatte verbunden ist eine Leiterfolie 10, die durch eine Dichtung 11 abgedichtet in den Hohlraum 8 eingeführt ist.

Mit dem ersten Abschnitt der Einrichtung gelenkig verbunden ist der mittlere Abschnitt 5. Die gelenkige Verbindung besteht aus zweiseitig an dem ersten Abschnitt angeformten Lagerzapfen, von denen der Lagerzapfen 12 in Figur 1 sichtbar ist, sowie einem ersten gabelförmigen Ende 13 des mittleren Abschnitts, welches den Lagerzapfen entsprechende Löcher zur Herstellung einer Schwenkverbindung aufweist. Im Bereich der Lagerzapfen greift an den ersten Abschnitt und an den mittleren Abschnitt eine Feder 14 an, die bestrebt ist, den mittleren Abschnitt zu dem ersten Abschnitt entgegen dem Uhrzeigersinn zu schwenken.

Im übrigen ist der mittlere Abschnitt U-förmig mit einem oberen Steg 15 ausgebildet. Zwischen den oberen Steg 15 und eine Klemmleiste 16 ist die Leiterfolie 10 eingespannt. Die Klemmleiste ist durch Rasten 17 mit dem Hauptkörper 18 des mittleren Abschnitts verbunden.

An seinem oberen Ende ist der mittlere Abschnitt als zweites gabelförmiges Ende 19 mit Bohrungen zur Bildung einer Schwenkverbindung mit Lagerzapfen 20 des äussersten Abschnittes ausgebildet. Der äusserste Abschnitt wird durch eine zweite an dem mittleren Abschnitt befestigte Feder 21 gegenüber dem mittleren Abschnitt entgegen dem Uhrzeigersinn geschwenkt. Damit wird erreicht, dass bei beliebigen lichten Höhen des Behälters der äusserste Abschnitt 3 sowohl gegen den Boden 4 als auch gegen die Oberseite 1 gedrückt wird, solange der äusserste Abschnitt länger als die lichte Höhe des Behälters ist. Durch Schrägstellung des äussersten Abschnitts werden Höhenunterschiede selbsttätig ausgeglichen. Durch den Andruck der Federn 14 und 21 wird weiterhin erreicht dass der äusserste Abschnitt gegenüber dem Behälter weitgehend festliegt.

Der äusserste Abschnitt 3 besteht in der in den Figuren 1, 4 und 5 gezeigten ersten Ausführungsform im wesentlichen aus zwei annähernd U-förmigen Hälften 22 und 23, mit etwa gleichem Abstand ihrer Schenkel voneinander. Beide U-förmige Hälften liegen mit ihren planen Schenkeln wechselseitig aneinander. Die Schenkel der Hälfte 22 sind mit 22a und 22b bezeichnet, während die Schenkel der Hälfte 23 die Bezugszeichen 23a und 23b tragen. Die Konfiguration der zusammengesteckten beiden Hälften ergibt sich eindeutig aus der Zeichnung.

Zwischen je einem Schenkel der ersten und der zweiten U-förmigen Hälfte ist auf beiden Seiten der U-Form die Leiterfolie eingespannt, und zwar annähernd Z-förmig. Dabei liegen mit einem Kompensationswiderstand versehene Randflächen 24, 25 zwischen je zwei Schenkeln, während eine Messleiterfläche 26 im Zentrum des durch die beiden U-förmigen Hälften gebildeten Hohlraum freiliegt. Die beiden Schenkel einer U-Form sind durch je einen gekrümmten Steg 27 bzw. 28 miteinander verbunden. Diese Stege sind elastisch verformbar, wenn die beiden U-förmigen Hälften zu dem Schutzrohr bzw. äussersten Abschnitt zusammengefügt werden. Hierzu werden an die Aussenkontur der aneinandergesetzten U-förmigen Hälften angepasste ringförmige Teile 30 auf die zusammengesetzten beiden Hälften geschoben. Ebenso angepasst an die Aussenkontur der beiden Hälften ist ein unteres Fussteil 31 mit einem abgeschrägten Boden 32, welches den äussersten Abschnitt unten im wesentlichen abschliesst. Zum Durchtritt des zu messenden Mediums ist jedoch eine Durchlassöffnung 33 in dem Fussteil vorgesehen. Der Fussteil ist mit Rastnasen 34 ausgestattet; ebenso die ringförmigen Teile 30 mit Rastnasen 29. Es können aber auch die U-förmigen Hälften selbst Ansätze 35, 35' aufweisen, die zum gegenseitigen Einrasten der beiden Hälften ineinander mit entsprechenden Gegenstücken ausgeformt sein können.

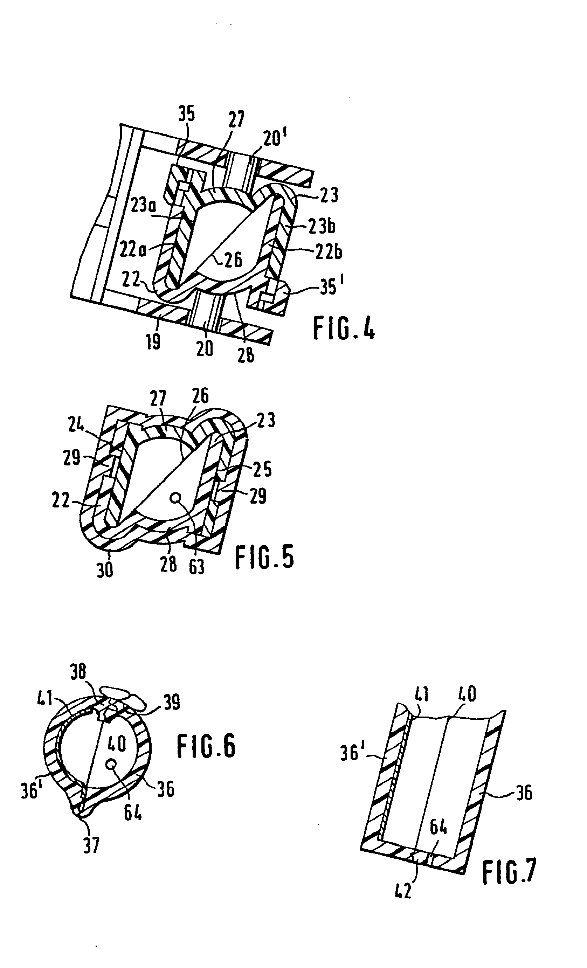

Die zweite Ausführungsform nach den Figuren 6 und 7 ist im Unterschied zu dem annähernd rechteckförmigen Schutzrohrquerschnitt nach den Figuren 4 und 5 annähernd kreisringförmig ausgebildet. Das Schutzrohr besteht hier aus zwei Rohrhälften 36 und 36', die durch ein Filmscharnier 37 einstückig miteinander verbunden sind. Das Filmscharnier verläuft entlang einer Mantellinie, während die beiden Rohrhälften an der gegenüberliegenden Mantellinie als Klemm- und Verschlussteile 38, 39 geformt sind. Zwischen die Klemm- und Verschlussteile 38, 39 und das gegenüberliegende Filmscharnier ist die Widerstandsfläche 40 der Leiterfolie eingespannt. Eine Randfläche 41 der Leiterfolie liegt an der Innenwand der Ringhälfte 36' an. Diese Randfläche trägt wiederum den Kompensationswiderstand und gegebenenfalls Zuleitungen.

Der unterste Teil des gemäss Figur 6 gebildeten Schutzrohres ist in Figur 7 dargestellt. Hieraus ist wiederum ersichtlich, wie die Widerstandsfläche 40 in eine Mittelebene zwischen beiden Schutzrohrhälften 36 und 36' eingespannt ist, nämlich auch in den Bodenteil 42. Das Bodenteil kann an der Einspannstelle der Messleiterfläche 40 durch Ultraschall verschweisst sein.

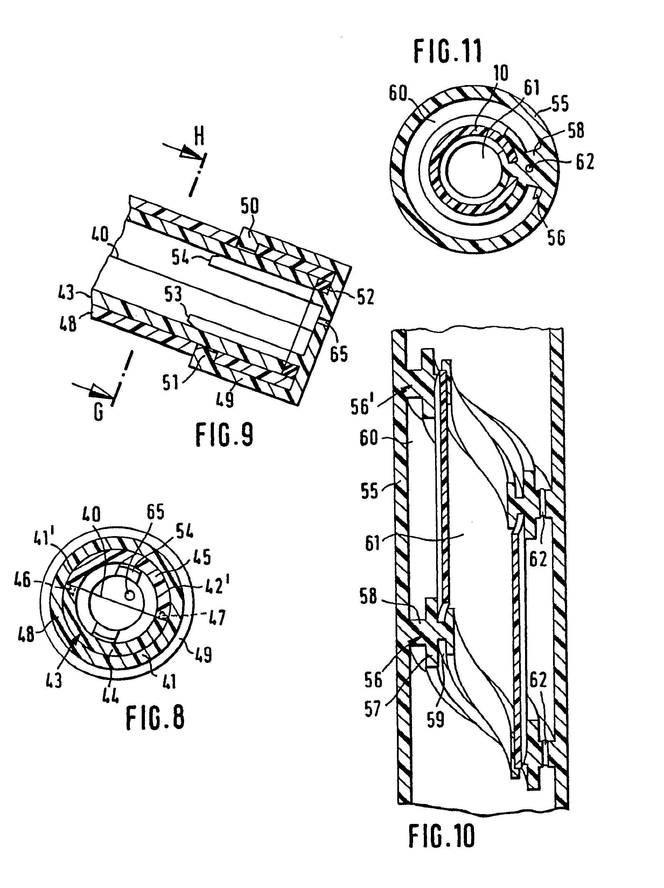

In der Ausführungsform nach den Figuren 8 und 9 besteht ein inneres Rohr 43 aus zwei vollständig trennbaren Rohrhälften 44 und 45, die durch Zapfen-Nut-Verbindungen 46, 47 formschlüssig anpassbar sind. Im Bereich dieser Zapfen-Nut-Verbindungen, die längs je einer Mantellinie liegen, wird wiederum die Leiterfolie eingespannt, und zwar deren Leiterabschnitt, d.h. Widerstandsfläche 40. Die Randbereiche, d.h. Randflächen 41 und 41', der Leiterfolie sind hier im wesentlichen S-förmig abgebogen, so dass sie das innere Rohr im wesentlichen umschliessen. Das innere Rohr und die Leiterfolie werden durch ein einstückiges äusseres Rohr 48 zusammengehalten, das auf die Randbereiche der Leiterfolie und das darunter befindliche innere Rohr geschoben ist.

Unten sitzt an der konzentrischen Anordnung des inneren Rohres 43 und des äusseren Rohres 48 ein Fussteil 49 mit Klemmnasen 50, 51, die in das äussere Rohr passen, sowie mit inneren Stegen 53, 54, die das Einführen des Fussteils erleichtern. In der unteren Stirnseite des inneren Rohrs 43 ist ein elastischer Ring 52 angeordnet. In den Figuren 10 und 11 ist eine vierte Ausführungsform des als Schutzrohr 55 ausgebildeten äussersten Abschnitts dargestellt, in dem die bandartige Leiterfolie 10 wendelförmig mit sich im wesentlichen axial im Schutzrohr 1 erstreckender Ebene angeordnet ist.

Über an den Längskanten der Leiterfolie 10 angreifende Halteelemente 56 bzw. 56' wird diese im Schutzrohr 55 gehalten.

In den Figuren 10 und 11 besteht das Halteelement 56 aus einer Haltewendel 57, die über einen radial nach aussen hervorstehenden Abstandshalter 58 mit der Innenwand des Schutzrohres in Verbindung steht. An ihren axial gerichteten Flächen ist die Haltewendel 57 jeweils mit einer nutartigen Ausnehmung 59 ausgebildet. Der Abstand der einander zugewandten Ausnehmungen entspricht etwa der Breite der Leiterfolie, die mit ihren Längskanten in die Ausnehmungen eingesetzt ist. Auf diese Weise ist die Leiterfolie eine wendelförmige Kammer 60 bildend in sicherem Abstand zur Innenwand des Schutzrohres 55 gehalten und umschliesst radial nach innen einen zylindrischen Raum 61. Sowohl auf der Seite der Kammer 60 als auch auf der Seite des zylindrischen Raumes 61 kann die Leiterfolie weitgehend über ihre ganze Oberfläche von der Flüssigkeit umspült werden.

Zur Unterstützung eines Flüssigkeitsaustausches von einem Abschnitt der Kammer 60 zum anderen daneben liegenden Abschnitt der Kammer 60, sowie von der Kammer radial nach aussen, sind in der Haltewendel Durchflussöffnungen 62 ausgebildet.

Durch den zylindrischen Raum 61 kann ein nicht dargestelltes Entnahmerohr geführt werden.

Eine Öffnung 63 bzw. 64 bzw. 65 in jedem der Fussteile nach den Figuren 5; 6; 7; 8; 9 sorgt dafür, dass der Flüssigkeitspegel an der Messleiterfläche dem Füllstand in dem Behälter entspricht.

**Patentansprüche**

1. Einrichtung zur elektrischen Füllstandsmessung einer Flüssigkeit in einem Behälter, insbesondere einem Fahrzeugtank, mit einer von einem Schutzrohr umschlossenen Leiterfolie (10), deren Leiter einen temperaturabhängigen fremdbeheizten Widerstand oder Elektroden eines Messkondensators bilden, sowie mit einem als Schutzrohr ausgebildeten Träger der Leiterfolie, der oben schwenkbar ist und mit einer Feder (21) versehen ist, welche den Träger gegen den Boden des Behälters drückt, dadurch gekennzeichnet, dass der Träger in drei annähernd starre Abschnitte (2, 3, 5) unterteilt ist, von denen je zwei Abschnitte (2, 5; 5, 3) kniehebelartig gelenkig miteinander verbunden sind und unter Federspannung (14, 21) stehen, dergestalt, dass der äusserste Abschnitt (3) auf dem Boden (4) und an einer Oberseite (1) des Behälterinneren abstützbar ist.

2. Einrichtung nach Anspruch 1, dadurch gekennzeichnet, dass ein an der Oberseite (1) des Behälters befestigbarer Abschnitt (2) des Trägers wesentlich kürzer als die beiden anderen Abschnitte (3, 5) bemessen ist.

3. Einrichtung nach Anspruch 2, dadurch gekennzeichnet, dass der an der Oberseite (1) des Behälters befestigbare Abschnitt (2) einen gegenüber dem Behälter abgedichteten Hohlraum (8) aufweist, in dem eine Leiterplatte (9) mit einer Auswerteschaltung untergebracht ist, und dass die bandförmig ausgeführte Leiterfolie (10) in diesen Hohlraum durch eine Dichtung (11) eingeführt ist.

4. Einrichtung nach einem der Ansprüche 1 bis 3, dadurch gekennzeichnet, dass der äusserste Abschnitt (3) aus zwei sich über seine Länge erstreckenden Hälften (22, 23; 36, 36') besteht, die zu dem Schutzrohr formschlüssig zusammenfügbar und in dieser zusammengefügten Form verrastbar ausgebildet sind, und dass die Leiterfolie (10) zwischen beiden Hälften derart einklemmbar ist, dass ihre Messleiterfläche (26; 40) im Innern des Schutzrohres freiliegt.

5. Einrichtung nach Anspruch 4, dadurch gekennzeichnet, dass jede der beiden Hälften (22, 23) im Querschnitt annähernd U-förmig, mit etwa gleichem Abstand der Schenkel voneinander ausgebildet ist, dass jeweils zwei Schenkel (22a, 22b, bzw. 23a, 23b) jeder U-förmigen Hälfte mit ihren Innen- bzw. Aussenseiten aneinanderliegen und dass zwischen zwei aneinanderliegenden Schenkeln (z.B. 22a, 23a) Randflächen der Leiterfolie eingeklemmt sind.

6. Einrichtung nach Anspruch 5, dadurch gekennzeichnet, dass die beiden Hälften (22, 23) mit Rastansätzen (35, 35') an diagonal gegenüberliegenden Kanten versehen sind.

7. Einrichtung nach Anspruch 4 oder 5, dadurch gekennzeichnet, dass ringförmige oder klammerförmige Teile (30, 30' 30'') über beide Häften (22, 23) aufschiebbar sind und auf diesen einrasten.

8. Einrichtung nach Anspruch 5, dadurch gekennzeichnet, dass die Leiterfolie (10) annähernd Z-förmig ausgebildet ist, wobei ihre Endbereiche zwischen den aneinanderliegenden U-Schenkeln eingespannt sind und sich ihr mittlerer, die Messleiterfläche (26) bildender Bereich diagonal über den Innenraum des äussersten Abschnitts (3) erstreckt.

9. Einrichtung nach Anspruch 4, dadurch gekennzeichnet, dass der äusserste Abschnitt (3) als längs einer ersten Mantellinie geschnittenes Rohr aus Kunststoff geformt ist, dessen beide Hälften (36, 36') längs einer zweiten Mantellinie durch ein Filmscharnier (37) miteinander verbunden sind, und dass die Leiterfolie (10) zwischen beiden Hälften (36, 36') in der die beiden Mantellinien umfassenden Mittelebene längs des Rohres eingespannt ist.

10. Einrichtung nach Anspruch 4, dadurch gekennzeichnet, dass der äusserste Abschnitt (3) ein aus zwei etwa gleichen, halbrohrförmigen Rohrhälften (44, 45) bestehendes inneres Rohr aufweist, das durch mindestens ein es umschliessendes äusseres Rohr (48) zusammengehalten wird, und dass die Leiterfolie annähernd S-förmig ausgebildet ist, wobei jeweils die äusseren Bereiche des S zwischen je einer Hälfte des inneren Rohres und dem äusseren Rohr eingeklemmt sind und der die Messleiterfläche (40) bildende, die äusseren Bereiche des S verbindende Teil des S sich radial durch die Mittelebene des inneren Rohres erstreckt.

11. Einrichtung nach einem der Ansprüche 1 bis 3, dadurch gekennzeichnet, dass der äusserste Abschnitt (3), als Schutzrohr (55) mit dergestalt innen angeformten Halteelementen (56, 56') für die Leiterfolie (10) ausgebildet ist, dass die Leiterfolie durch die an ihren Längskanten angreifenden Halteelemente (56, 56') wendelförmig in dem Schutzrohr gehalten wird.

12. Einrichtung nach Anspruch 11, dadurch gekennzeichnet, dass sich die Ebene der Leiterfolie im Schutzrohr im wesentlichen radial erstreckt.

13. Einrichtung nach Anspruch 11, dadurch gekennzeichnet, dass sich die Ebene der Leiterfolie (10) im wesentlichen axial im Schutzrohr (55) erstreckt.

14. Einrichtung nach einem der Ansprüche 11 bis 13, dadurch gekennzeichnet, dass ein Entnahmerohr koaxial durch die Wendel der Leiterfolie hindurchragt.

15. Einrichtung nach einem der Ansprüche 11 bis 14, dadurch gekennzeichnet, dass die Halteelemente (56, 56') durch eine radial an der Schutzrohrinnenwand angrenzende Haltewendel (57) gebildet ist.

16. Einrichtung nach Anspruch 13, dadurch gekennzeichnet, dass die Haltewendel (57) mit dem Schutzrohr einteilig ausgebildet ist.

17. Einrichtung nach einem der Ansprüche 11 bis 15, dadurch gekennzeichnet, dass die Haltewendel (57) eine nutförmige Aushmung (59) besitzt, in die die Leiterfolie (10) mit ihrem Bereich ihrer Längskante hineinragt.

18. Einrichtung nach Anspruch 16, dadurch gekennzeichnet, dass die Haltewendel (57) zwei axial in entgegengesetzter Richtung gerichtete nutartige Ausnehmungen (59) besitzt und dass der Abstand von Nutboden zu Nutboden der mit ihren Öffnungen einander gegenüberliegenden Ausnehmungen etwa der Breite der Leiterfolie (10) entspricht.

19. Einrichtung nach einem der Ansprüche 11 bis 16, dadurch gekennzeichnet, dass die Haltewendel (57) eine radial nach aussen gerichtete Anlagefläche besitzt, an der die Leiterfolie (10) mit ihrem Randbereich in Anlage ist.

20. Einrichtung nach Anspruch 19, dadurch gekennzeichnet, dass die Haltewendel (57) zwei Anlageflächen besitzt und dass je an einer Anlagefläche ein Randbereich der Leiterfolie (10) in Anlage ist.

21. Einrichtung nach einem der Ansprüche 11 bis 20 dadurch gekennzeichnet, dass die Haltewendel (57) einen radial an der Innenwand des Schutzrohres (1) und/oder dem Entnahmerohr anliegenden Abstandshalter (58) besitzt.

22. Einrichtung nach einem der vorhergehenden Ansprüche, dadurch gekennzeichnet, dass das Schutzrohr radiale Durchflussöffnungen besitzt und/oder dass die Haltewendel (57) und ein das Schutzrohr abschliessendes Fussteil axiale Durchflussöffnungen (62) besitzen.

23. Einrichtung nach einem der vorangehenden Ansprüche, dadurch gekennzeichnet, dass oben an dem äussersten Abschnitt des Trägers Lagerzapfen (20, 20') angeformt sind, die in Löchern drehbar sind, die sich in einem gabelförmigen Ende (19) des mittleren Abschnitts des Trägers befinden.

24. Einrichtung nach Anspruch 23, dadurch gekennzeichnet, dass der mittlere Abschnitt (5) eine sich in seiner Längsrichtung erstreckende Klemmleiste (16) aufweist, an der die Leiterfolie (10) mit Ausnahme ihrer Endbereiche gestreckt gehalten ist, wobei diese sich in den Schwenk- bzw. Lagerbereichen befindlichen Endbereiche der Leiterfolie (10) Schleifenförmig, frei bewegbar geführt sind.

**Claims**

1. Device for the electrical measuring of the level of a liquid in a container, especially a vehicle tank, with a conductor foil (10) which is surrounded by a protective tube and whose conductors form a temperature-dependent externally heated resistor or electrodes of a measuring capacitor, also with a conductor foil support which is constructed as a protective tube and which is pivotable at the upper region and is provided with a spring (21) pressing the support against the bottom of the container, characterised in that the support is subdivided into three approximately rigid sections (2, 3, 5) each two sections (2, 5; 5, 3) of which are connected to one another with a toggle joint type of connection and are under spring preload (14, 21), in such a manner that the outermost section (3) is adapted to bear against the bottom (4) and a topside (1) of the container interior.

2. Device according to claim 1, characterised in that one support section (2) fixable to the container topside (1) is dimensioned to be substantially shorter than the two other sections (3, 5).

3. Device according to claim 2, characterised in that the section (2) fixable to the container topside (1) comprises a chamber (8) which is sealed off relatively to the container and in which a conductor plate (9) with an evaluation circuit is arranged, and that the conductor foil (10), which is of bandshaped form, is introduced into this chamber through a sealing element (11).

4. Device according to one of claims 1 to 3, characterised in that the outermost section (3) consists of two halves (22, 23; 36, 36') which extend over the length of the said section and which are constructed to be joinable together in a positive connection to constitute the protective tube, and to be latchable in this joined form, and that the conductor foil (10) is adapted to be clamped in between the two halves in such a manner that its measuring conductor surface (26; 40) is exposed in the interior of the protective tube.

5. Device according to claim 4, characterised in that each of the two halves (22, 23) is constructed with an approximately U-shaped cross-section with the legs at substantially the same spacing from one another, that each two legs (22a, 22b and 23a, 23b respectively) of each U-shaped half abut on one another with their inner and outer sides respectively, and that edge areas of the conductor foil are clamped in between two mutually adjoining legs (e.g.22a, 23a).

6. Device according to claim 5, characterised in that the two halves (22, 23) are provided with latching projections (35, 35') at diagonally opposite edges.

7. Device according to claim 4 or 5, characterised in that ring-shaped or clip-shaped parts (30, 30', 30'') are adapted to be fitted over the two halves (22, 23) and latch on to the said halves.

8. Device according to claim 5, characterised in that the conductor foil (10) is of approximately Z-shaped construction, its end regions are clamped between the U legs adjacent one another, and its central region which forms the measuring conductor surface (26) extends diagonally over the interior space of the outermost section (3).

9. Device according to claim 4, characterised in that the outermost section (3) is formed from synthetic plastic material as a tube cut along a first generatrix, the two halves (36, 36') of said tube being connected to one another along a second generatrix by a film hinge (37), and that the conductor foil (10) is clamped in between the two halves (36, 36') in a central plane extending along the tube and comprehending both generatrices.

10. Device according to claim 4, characterised in that the outermost section (3) comprises an inner tube consisting of two substantially like tube halves (44, 45) of semitubular form, which tube is held together by at least one outer tube (48) surrounding it, and that the conductor foil is made approximately S- shaped, the respective outer regions of the S being clamped between a respective half of the inner tube and the outer tube, and the portion of the S which forms the measuring conductor surface (40) and connects the outer regions of the S extends radially through the central plane of the inner tube.

11. Device according to one of claims 1 to 3, characterised in that the outermost section (3) is constructed as a protective tube (55) with holding elements (56, 56') for the conductor foil (10) which are formed on it internally in such a manner that the conductor foil is held helically in the protective tube by the holding elements (56, 56') which engage on its longitudinal edges.

12. Device according to claim 11, characterised in that the plane of the conductor foil extends substantially radially in the protective tube.

13. Device according to claim 11, characterised in that the plane of the conductor foil (10) extends substantially axially in the protective tube (55).

14. Device according to one of claims 11 to 13, characterised in that an extraction tube projects coaxially through the helix of the conductor foil.

15. Device according to one of claims 11 to 14, characterised in that the holding elements (56, 56') are formed by a holding helix (57) radially adjoining the inner wall of the protective tube.

16. Device according to claim 13, characterised in that the holding helix (57) is made in one piece with the protective tube.

17. Device according to one of claims 11 to 15, characterised in that the holding helix (57) has a groove-form recess (59) into which the longitudinal edge region of the conductor foil (10) projects.

18. Device according to claim 16, characterised in that the holding helix (57) has two groove-type recesses (59) directed axially in opposite directions, and that the spacing between the groove bottoms of the recesses, which recesses are situated with their openings opposite one another, corresponds substantially to the width of the conductor foil (10).

19. Device according to one of claims 11 to 16, characterised in that the holding helix (57) has a radially outwardly directed abutment surface on which the edge region of the conductor foil (10) abuts.

20. Device according to claim 19, characterised in that the holding helix (57) has two abutment surfaces and that an edge region of the conductor foil (10) abuts against a respective abutment surface in each case.

21. Device according to one of claims 11 to 20, characterised in that the holding helix (57) has a spacer element (58) adjacent radially to the inner wall of the protective tube (1) and/or to the extraction tube.

22. Device according to one of the preceding claims, characterised in that the protective tube has radial throughflow apertures and/or that the holding helix (57) and a foot part closing the protective tube have axial throughflow apertures (62).

23. Device according to one of the preceding claims, characterised in that at the top of the outermost section of the support there are formed-on bearing pins (20, 20') which are pivotable in holes situated in a fork-sharped end (19) of the central section of the support.

24. Device according to claim 23, characterised in that the central section (5) comprises a clamping strip (16) which extends in the longitudinal direction of the said section and on which the conductor foil (10) is held extended except for the end regions of the said foil, these end regions of the conductor foil (10), which are situated in the pivoting movement or bearing zones, being guided to have a loop shape so as to be freely movable.

**Revendications**

1. Dispositif pour mesurer électriquement le niveau d'emplissage d'un récipient par un liquide, notamment d'un réservoir de véhicule, comprenant une feuille conductrice (10) qui est entourée par un tube protecteur et dont les conducteurs forment une résistance chauffée de l'extérieur et dépendant de la température, ou des électrodes d'un condensateur de mesurage, ainsi qu'un support de la feuille conductrice qui, réalisé sous la forme d'un tube protecteur peut pivoter en partie haute et est pourvu d'un ressort (21) pressant ce support contre le fond du réservoir, dispositif caractérisé par le fait que le support est subdivisé en trois tronçons sensiblement rigides (2, 3, 5) parmi lesquels deux tronçons respectifs (2, 5; 5, 3) sont reliés l'un à l'autre par une articulation du type genouillère et sont soumis à une force élastique (14, 21), de telle sorte que le tronçon extrême externe (3) puisse prendre appui contre le fond (4) et contre une face supérieure (1) de l'espace interne dudit réservoir.

2. Dispositif selon la revendication 1, caractérisé par le fait qu'un tronçon (2) du support, pouvant être fixé à la face supérieure (1) du réservoir, est dimensionné notablement plus court que les deux autres tronçons (3, 5).

3. Dispositif selon la revendication 2, caractérisé par le fait que le tronçon (2) pouvant être relié à la face supérieure (1) du réservoir présente une cavité (8) qui est rendue étanche par rapport à ce réservoir, et dans laquelle est logée une plaque conductrice (9) munie d'un circuit d'interprétation; et par le fait que la feuille conductrice (10) réalisée en forme de ruban est introduite dans cette cavité par l'intermédiaire d'une garniture d'étanchement (11).

4. Dispositif selon l'une des revendications 1 à 3, caractérisé par le fait que le tronçon extrême externe (3) se compose de deux moitiés (22, 23; 36, 36') qui s'étendent sur sa longueur, peuvent être assemblées par concordance de formes pour constituer un tube protecteur, et sont réalisées pour pouvoir être encliquetées dans cette forme assemblée; et par le fait que la feuille conductrice (10) peut être coincée entre les deux moitiés, de telle manière que sa surface conductrice mesureuse (26; 40) occupe une position libre à l'intérieur du tube protecteur.

5. Dispositif selon la revendication 4, caractérisé par le fait que chacune des deux moitiés (22, 23) est réalisée de section sensiblement en U avec des branches mutuellement distinctes d'un intervalle sensiblement égal; par le fait que deux branches respectives (22a, 22b; 23a, 23b) de chaque moitié en U portent l'une contre l'autre par leur faces respectivement internes ou externes; et par le fait que des surfaces marginales de la feuille conductrice sont coincées entre deux branches portant l'une contre l'autre (par exemple 22a, 23a).

6. Dispositif selon la revendication 5, caractérisé par le fait que les deux moitiés (22, 23) sont pourvues de saillies d'encliquetage (35, 35') sur des arêtes diagonalement opposées.

7. Dispositif selon la revendication 4 ou 5, caractérisé par le fait que des pièces annulaires ou en forme d'agrafes (30, 30', 30'') peuvent être enfilées sur les deux moitiés (22, 23), sur lesquelles elles s'encliquettent.

8. Dispositif selon la revendication 5, caractérisé par le fait que la feuille conductrice (10) est de réalisation sensiblement en Z, ses régions extrêmes étant enserrées entre les branches du U qui portent l'une contre l'autre, la région médiane de cette feuille, formant la surface conductrice mesureuse (26), s'étendant diagonalement sur l'espace interne du tronçon extrême externe (3).

9. Dispositif selon la revendication 4, caractérisé par le fait que le tronçon extrême externe (3) est conformé en un tube de matière plastique entaillé le long d'une première génératrice, et dont les deux moitiés (36, 36') sont reliées l'une à l'autre, le long d'une seconde génératrice, par l'intermédiaire d'une pellicule formant charnière (37); et par le fait que la feuille conductrice (10) est enserrée entre les deux moitiés (36, 36'), le long du tube, dans le plan médian englobant les deux génératrices.

10. Dispositif selon la revendication 4, caractérisé par le fait que le tronçon extrême externe (3) présente un tube interne se composant de deux moitiés tubulaires (44, 45) sensiblement identiques, en forme de demi-tube, dont la cohésion est assurée par l'intermédiaire d'au moins un tube externe (48) qui l'entoure; et par le fait que la feuille conductrice est réalisée sensiblement sous la forme d'un S, les régions externes respectives de ce S étant à chaque fois coincées entre une moitié du tube interne et le tube externe, tandis que la partie du S, qui forme la surface conductrice mesureuse (40) et raccorde les régions externes du S, s'étend radialement par le plan médian du tube interne.

11. Dispositif selon l'une des revendications 1 à 3, caractérisé par le fait que le tronçon extrême externe (3) est réalisé sous la forme d'un tube protecteur (55) muni d'éléments (56, 56') de retenue de la feuille conductrice (10), qui sont ménagés intérieurement de telle sorte que cette feuille conductrice soit retenue hélicoïdalement dans le tube protecteur par lesdits éléments de retenue (56, 56') venant en prise avec ses arêtes longitudinales.

12. Dispositif selon la revendication 11, caractérisé par le fait que le plan de la feuille conductrice s'étend pour l'essentiel radialement dans le tube protecteur.

13. Dispositif selon la revendication 11, caractérisé par le fait que le plan de la feuille conductrice (10) s'étend pour l'essentiel axialement dans le tube protecteur (55).

14. Dispositif selon l'une des revendications 11 à 13, caractérisé par le fait qu'un tube de prélèvement traverse coaxialement de part en part les spires de la feuille conductrice.

15. Dispositif selon l'une des revendications 11 à 14, caractérisé par le fait que les éléments de retenue (56, 56') sont formés par une hélice de retenue (57) radialement adjacente à la paroi interne du tube protecteur.

16. Dispositif selon la revendication 13, caractérisé par le fait que l'hélice de retenue (57) est réalisée d'un seul tenant avec le tube protecteur.

17. Dispositif selon l'une des revendications 11 à 15, caractérisé par le fait que l'hélice de retenue (57) possède un évidement (59) en forme de gorge, dans lequel la feuille conductrice (10) s'engage par la région de son arête longitudinale.

18. Dispositif selon la revendication 16, caractérisé par le fait que l'hélice de retenue (57) comprend deux évidements (59) en forme de gorge s'étendant axialement dans des directions opposées; et par le fait que la distance de fond de gorge à fond de gorge des évidements se faisant face par leurs ouvertures correspond sensiblement à la largeur de la feuille conductrice (10).

19. Dispositif selon l'une des revendications 11 à 16, caractérisé par le fait que l'hélice de retenue (57) possède une surface de contact dirigée radialement vers l'extérieur, contre laquelle la feuille conductrice (10) porte par sa région marginale.

20. Dispositif selon la revendication 19, caractérisé par le fait que l'hélice de retenue (57) comprend deux surfaces de contact; et par le fait qu'une région marginale de la feuille conductrice (10) est appliquée contre une surface de contact respective.

21. Dispositif selon l'une des revendications 11 à 20, caractérisé par le fait que l'hélice de retenue (57) possède un élément d'espacement (58) appliqué radialement contre la paroi interne du tube protecteur (1) et/ou contre le tube de prélèvement.

22. Dispositif selon l'une des revendications précédentes, caractérisé par le fait que le tube protecteur présente des orifices radiaux d'écoulement-traversant; et/ou par le fait que l'hélice de retenue (57) et une embase obturant le tube protecteur possèdent des orifices axiaux (62) d'écoulement traversant.

23. Dispositif selon l'une des revendications précédentes caractérisé par le fait que des tourillons (20, 20') venus solidairement de moulage dans la partie haute du tronçon extrême externe du support, peuvent tourner dans des trous ménagés dans une extrémité fourchue (19) du tronçon médian dudit support.

24. Dispositif selon la revendication 23, caractérisé par le fait que le tronçon médian (5) présente une barrette de coincement (16) qui s'étend dans sa direction longitudinale et sur laquelle la feuille conductrice (10) est maintenue déployée, à l'exception de ses régions extrêmes, ces régions extrêmes de la feuille conductrice (10), situées dans les zones respectives de pivotement ou de portée, étant guidées en forme de boucles et à mouvements libres.

FIG.1

FIG.2

FIG.3

FIG.4

FIG.5

FIG.6

FIG.7

FIG.11

FIG.9

FIG.8

FIG.10